# EUROPÄISCHE PATENTSCHRIFT

(11) **EP 2 987 604 B1**
(45) Veröffentlichungstag und Bekanntmachung des Hinweises auf die Patenterteilung: **16.11.2016**
(21) Anmeldenummer: 14181649.6
(22) Anmeldetag: 20.08.2014
(51) Int. Cl.: B29C 49/42

(54) **Vorrichtung und Verfahren zum Vakuumrecycling in einer Behälterbehandlungsanlage**
Device and method for vacuum recycling in a container treatment system
Dispositif et procédé de recyclage à vide dans une installation de traitement de récipient

(43) Veröffentlichungstag der Anmeldung: 24.02.2016
(73) Patentinhaber: Krones AG, 93073 Neutraubling (DE)
(72) Erfinder: Winzinger, Frank, 93073 Neutraubling (DE); Roidl, Wolfgang, 93073 Neutraubling (DE)
(74) Vertreter: Grünecker Patent- und Rechtsanwälte PartG mbB

(56) Entgegenhaltungen:
- EP-A1- 0 622 301
- DE-A1- 3 111 925
- DE-A1-102013 100 513

## Beschreibung

Die Erfindung betrifft eine Vorrichtung und ein Verfahren zum Vakuumrecycling in einer Behälterbehandlungsanlage, siehe z.B. DE-A-3111925. Insbesondere betrifft die Erfindung eine solche Vorrichtung und ein solches Verfahren im Zusammenhang mit Füllvorrichtungen zum Füllen von Behältern, beispielsweise Flaschen, mit einem im Wesentlichen flüssigen Füllprodukt, z. B. einem Getränk oder einem Hygieneprodukt, Blas- und Streckblasvorrichtungen zur Herstellung von Kunststoffbehältern, beispielsweise PET-Flaschen, durch Beaufschlagen entsprechender Preforms (Vorformlinge) mit einem komprimierten Gas und kombinierte Formfüllvorrichtungen zum gleichzeitigen Ausformen und Befüllen von Kunststoffbehältern durch Befüllen des Preforms unter Druck mit dem Füllprodukt, bei denen ein Unterdruck in einer Vakuumkammer der Behandlungsstation erzeugt wird, um den Ausform- und/oder Füllprozess zu beschleunigen.

Füllvorrichtungen zum Befüllen von Behältern und Blas- bzw. Streckblasvorrichtungen sind in der Abfülltechnik, insbesondere in der Getränkeabfüllung, wohl bekannt. Seit kurzem werden auch Formfüllmaschinen zum gleichzeitigen Ausformen und Füllen von Kunststoffbehältern eingesetzt.

Bekanntermaßen lassen sich Kunststoffbehälter im Streckblasverfahren aus Vorformlingen (Preforms) herstellen.

Insbesondere handelt es sich bei den Kunststoffbehältern vor dem Expandieren um Vorformlinge (Preforms), die bevorzugt die Form eines Reagenzglases aufweisen bzw. eine einzige Öffnung aufweisen. In der Nähe dieser Öffnung befindet sich ein Mündungsbereich, welcher beispielsweise mit einem schon im Spritzgussverfahren angeformten Gewinde für einen Verschluss versehen wurde. Zusätzlich kann im Mündungsbereich ein Tragring vorgesehen sein, welcher zum Transport vorgesehen ist.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wassers, hydraulisch zu einem Behälter geweitet wird. Danach wird das Fluid durch Pressluft verdrängt und läuft aus dem Behälter ab.

Eine Formfüllmaschine umfasst definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Wie bei einer Füllvorrichtung oder einer Blas- bzw. Streckblasvorrichtung kann der Vorgang des Ausformens und / oder Befüllens durch Erzeugen eines Teilvakuums in der Prozesskammer beschleunigt werden, die dazu druckdicht in Form einer Vakuumkammer ausgebildet ist. Nach Einbringen des zu behandelnden Preforms oder Behälters muss die Vakuumkammer jedoch zunächst auf den gewünschten Prozessdruck evakuiert werden, was im Allgemeinen unmittelbar über eine Vakuumpumpe geschieht, die mit der Vakuumkammer über entsprechende Absaugleitungen verbunden ist. Beim erneuten Öffnen der Vakuumkammer zur Entnahme des behandelten Behälters geht das so erzeugte Vakuum jedoch durch Druckausgleich mit der Umgebung der Vakuumkammer verloren, wodurch ein Großteil der von der Vakuumpumpe aufgebrachten Leistung ungenutzt bleibt.

Der vorliegenden Erfindung liegt daher die Aufgabe zugrunde, diesen ungenutzten Teil der Leistung der Vakuumpumpe möglichst optimal zu nutzen. Ganz allgemein liegt der vorliegenden Erfindung die Aufgabe zugrunde, die Energieeffizienz der Behälterbehandlungsanlage zu verbessern und den Energiebedarf der Vakuumpumpe zu reduzieren. Durch Reduzieren der Vakuumpumpe soll die Anlage zudem kompakter ausgeführt werden.

Die oben genannten Aufgaben werden durch eine Vorrichtung zum Vakuumrecycling in einer Behälterbehandlungsanlage gelöst, umfassend eine Vielzahl von Behandlungsstationen, welche jeweils einen abschließbaren Vakuumbereich aufweisen, eine Vielzahl von Verbindungsleitungen, die die Vakuumbereiche miteinander und / oder mit einem zentralen Vakuumspeicher verbinden, und eine Steuer- und/oder Regeleinheit, die derart ausgebildet ist, dass ein in einem Vakuumbereich erzeugtes Vakuum teilweise an einen anderen Vakuumbereich und / oder den Vakuumspeicher weitergeschaltet wird.

Hier und im Folgenden ist der Begriff Vakuum dahingehend zu verstehen, dass der in dem Vakuumbereich vorherrschende Druck niedriger als der Umgebungsdruck ist. Insbesondere kann der vorherrschende Druck im Bereich von 0,1 bis 0,9 bar, bevorzugt von 0,3 bis 0,8 bar, besonders bevorzugt von 0,5 bis 0,7 bar liegen. Je nach Behandlungsstation sind jedoch auch andere Druckbereiche für das Vakuum denkbar. Die vorliegende Erfindung beschränkt sich explizit nicht auf die genannten Bereiche, sondern ist prinzipiell für jeden Vakuumdruck anwendbar.

Insbesondere sind auch Unterdrücke von 0,1 bis 0,4 bar im Vakuumbereich realisierbar.

Insbesondere herrscht im abzufüllenden Behälter unmittelbar vor dem Abfüllen ein Druck von 0,05 bis 0,9 bar, bevorzugt zwischen 0,1 und 0,8 bar.

Insbesondere weicht der Druck im Vakuumbereich von dem Druck im Behälter unmittelbar vor dem Abfüllen um weniger als 0,2 bar ab. Es kann sich aber auch um denselben Druck handeln.

Unter einem Vakuumbereich ist hier und im Folgenden ein abschließbares Volumen einer Behandlungsstation zum Durchführen eines Behandlungsprozesses an einem oder mehreren Behältern und/oder Preforms (Vorformlingen) zu verstehen, wobei das Volumen zum Durchführen des Behandlungsprozesses auf einen Druck evakuiert wird, der niedriger als der Umgebungsdruck ist. Dabei kann die Umgebung durch die Umgebung der Behälterbehandlungsanlage oder den Innenraum eines Isolators, d. h. Reinraums, gegeben sein. Im Allgemeinen wird der Umgebungsdruck dem Atmosphärendruck entsprechen. Bei der Behandlungsstation kann es sich beispielsweise um eine Füllstation zum Befüllen der Behälter, eine Formmaschine, insbesondere Blasformmaschine, eine der bereits erwähnten Formfüllmaschinen, eine Beschichtungsstation, oder dergleichen handeln. Entsprechend kann der durchzuführende Behandlungsprozess das Füllen eines Behälters mit einem Füllprodukt, insbesondere einem flüssigen Lebensmittel, das Ausformen eines Kunststoffbehälters durch einen Blasprozess oder Streckblasprozess, das Ausformen und gleichzeitige Befüllen eines Kunststoffbehälters mittels eines flüssigen Füllprodukts, welches gleichzeitig zum Ausformen dient, einen vakuumgestützten Beschichtungsprozess oder dergleichen umfassen.

Die genannten Prozesse sind prinzipiell im Stand der Technik bekannt und werden daher hier nicht weiter erläutert. Es soll lediglich erwähnt werden, dass die genannten Füll-, Ausform- bzw. Füllformprozesse zur Unterstützung bzw. Beschleunigung des Prozesses in einem Teilvakuum, also bei Unterdruck ausgeführt werden. Im Folgenden wird der Einfachheit halber stets der Begriff Vakuum verwendet, auch wenn ein signifikanter Restdruck in dem Vakuumbereich verbleibt. Beispielsweise kann der Füllprozess erheblich dadurch beschleunigt werden, dass der Innenraum des zu befüllenden Behälters vor dem Befüllen evakuiert wird. Dies kann insbesondere dadurch geschehen, dass der zu befüllende Behälter in einer abgeschlossenen Kammer befüllt wird, die zuvor evakuiert wurde. Ebenso kann ein Blasform- bzw. Streckblasprozess durch Anlegen eines Vakuums zwischen Preform und Innenwand der Blasform unterstützt werden. Gleiches gilt für einen Formfüllprozess, bei dem sowohl der Innenraum des zu befüllenden Preforms als auch der Raum zwischen Preform und Innenwand der Blasform evakuiert werden kann. Insbesondere kann auch der Formfüllprozess in einer speziell dafür vorgesehenen Vakuumkammer durchgeführt werden.

Erfindungsgemäß ist der Vakuumbereich abschließbar, d. h. der Vakuumbereich bezeichnet ein druckdicht abgeschlossenes Volumen mit einer oder mehreren druckdicht verschließbaren Öffnungen. Zu diesem Zweck sind die Öffnungen insbesondere mit einer steuer- oder regelbaren Schließvorrichtung, wie beispielsweise einem schaltbaren Ventil, einer schaltbaren Klappe, einem regelbaren Schieber oder dergleichen versehen. Andere Optionen sind denkbar und im Stand der Technik bekannt. Entscheidend ist lediglich, dass die Öffnung oder die Öffnungen kontrolliert verschlossen und wieder geöffnet werden können, sodass innerhalb des Vakuumbereichs eine kontrollierte Atmosphäre vorherrscht. Das Öffnen und Schließen der Schließvorrichtungen, insbesondere der schaltbaren Ventile, erfolgt dabei mittels einer Steuer- und / oder Regeleinheit, die derart ausgebildet ist, dass ein in einem Vakuumbereich erzeugtes Vakuum teilweise an einen anderen Vakuumbereich und / oder den zentralen Vakuumspeicher weitergeschaltet wird. Erfindungsgemäß sind dazu die Vakuumbereiche miteinander und / oder mit dem zentralen Vakuumbereich über eine Vielzahl von Verbindungsleitungen verbunden, die durch Schalten von an oder in den Verbindungsleitungen vorgesehenen Schließvorrichtungen geöffnet und geschlossen werden können. Durch gezieltes Öffnen und Schließen der entsprechenden Ventile kann somit ein Druckausgleich zwischen zwei Vakuumbereichen und / oder einem Vakuumbereich und dem zentralen Vakuumspeicher hergestellt werden. Der Einfachheit halber ist im Folgenden von Ventilen die Rede, wobei stets die oben beschriebenen alternativen Schließvorrichtungen impliziert sind.

Ein teilweises Recycling eines Vakuums in einem Vakuumbereich erfolgt erfindungsgemäß, indem der evakuierte Vakuumbereich über eine der Verbindungsleitungen gezielt mit einem weiteren Vakuumbereich, in dem ein höherer Druck vorherrscht, in hydrodynamischen Kontakt gebracht wird. Aus dem weiteren Vakuumbereich strömt dabei Gas in den evakuierten Vakuumbereich, wodurch der Druck in dem weiteren Vakuumbereich abnimmt. Somit kann durch Öffnen der Verbindungsleitung ein teilweises Evakuieren des weiteren Vakuumbereichs erfolgen, sodass die benötigte Energie einer Vakuumpumpe zum Evakuieren des weiteren Vakuumbereichs auf einen gewünschten Zieldruck reduziert werden kann.

Bei der Vielzahl der Behandlungsstationen kann es sich insbesondere um gleichartige Behandlungsstationen zum Durchführen gleicher Behandlungsprozesse handeln. Beispielsweise kann die Vielzahl von gleichartigen Behandlungsstationen auf einem rotierenden Trägerrad eines Rundläufers angeordnet sein, um kontinuierlich einen Behandlungsprozess an einer Vielzahl von Behältern durchzuführen. Da der Prozess wie oben beschrieben unter Vakuumbedingungen erfolgt, muss der entsprechende Vakuumbereich nach Einbringen des zu behandelnden Behälters oder Preforms auf den gewünschten Unterdruck evakuiert werden, was im Allgemeinen mit Hilfe einer Vakuumpumpe erfolgt. Zur Entnahme des behandelten Behälters muss der Vakuumbereich anschließend auf Umgebungsdruck entlastet werden, wenn nicht die gesamte Behandlungsanlage unter Vakuumbedingungen operieren soll, was prozesstechnisch und vom Anlagenbau her nur sehr aufwändig zu realisieren ist. Die erfindungsgemäße Vorrichtung erlaubt somit ein teilweises Bewahren des in dem Vakuumbereich vor dem Entlasten vorliegenden Vakuums, indem der Unterdruck zum teilweisen Evakuieren eines nach Einbringen eines zu behandelnden Behälters bzw. Preforms druckdicht geschlossenen weiteren Vakuumbereichs in Vorbereitung des durchzuführenden Behandlungsprozesses verwendet wird. Dies kann direkt oder indirekt erfolgen, beispielsweise über den zuvor erwähnten zentralen Vakuumspeicher.

Die Verbindungsleitungen können dabei derart vorgesehen sein, dass, abhängig von der Anzahl der Behandlungsstationen und der prozesstechnischen Auslegung der Anlage, geeignete Vakuumbereiche miteinander und / oder mit dem zentralen Vakuumspeicher verbunden sind. Die Verbindungsleitungen können beispielsweise durch Verrohrung, formstabile Schläuche oder dergleichen realisiert werden.

Gemäß einer Weiterbildung kann die Vorrichtung weiterhin eine Vielzahl schaltbarer Ventile umfassen, die an den Schnittstellen zwischen den Vakuumbereichen und den Verbindungsleitungen angeordnet sind, wobei die Steuer- und / oder Regeleinheit wie oben beschrieben zum kontrollierten Öffnen und Schließen der schaltbaren Ventile ausgebildet ist. Dabei wird durch die Anordnung der schaltbaren Ventile das Volumen der Vakuumbereiche definiert. Um das Totraumvolumen einer Verbindungsleitung zwischen einem Vakuumbereich und einem zentralen Vakuumspeicher zu minimieren, kann das schaltbare Ventil beispielsweise unmittelbar an einer zu evakuierenden Kammer des Vakuumbereichs angeordnet werden (siehe unten). Bei Verbindungsleitungen zwischen zwei gleichartigen Vakuumbereichen bietet sich eine mittige Anordnung des Ventils zwischen den beiden Vakuumbereichen oder das Vorsehen je eines separaten Ventils unmittelbar an der Kammer des jeweiligen Vakuumbereichs an. Bei letzterer Weiterbildung lässt sich das Totraumvolumen bei Evakuierung der entsprechenden Kammern auf den Zieldruck weiter reduzieren, da das Volumen der Verbindungsleitung von diesem Evakuierungsschritt ausgespart werden kann.

Gemäß einer Weiterbildung können die Vakuum bereiche paarweise miteinander verbunden sein. Dabei können die Verbindungsleitungen derart angeordnet werden, dass je ein zu evakuierender Vakuumbereich mit einem zu entlastenden Vakuumbereich verbunden ist. Dabei kann ein Vakuumbereich auch mit mehr als einem weiteren Vakuumbereich ein Paar bilden. Bei Anordnung der Vielzahl von Behandlungsstationen in der Peripherie eines Rundläufers können die zugehörigen Vakuumbereiche beispielsweise "über Kreuz" miteinander verbunden werden. Die Paare von miteinander verbundenen Vakuumbereichen bilden somit eine Art Vakuumschaukel, bei der stets ein Teil des Vakuums an den jeweils zu evakuierenden Vakuumbereich "weitergeleitet" wird. Somit kann ein Teil der zum Erzeugen des Vakuums eingesetzten Energie recycelt werden. Da der Druck des miteinander kommunizierenden Paares von Vakuumbereichen nach dem Druckausgleich jedoch über dem gewünschten Zieldruck liegt, muss mittels einer Vakuumpumpe nachgepumpt werden. Dies kann jedoch indirekt über den zentralen Vakuumspeicher erfolgen.

Gemäß einer weiteren Weiterbildung kann der zentrale Vakuumspeicher hierzu beispielsweise einen Hauptspeicher umfassen, der mit einem Vakuumerzeuger, insbesondere mit einer Vakuumpumpe, verbunden ist. Vakuumpumpen sind im Stand der Technik wohlbekannt und werden daher hier nicht weiter erläutert. Die Verbindung des zentralen Vakuumspeichers, insbesondere des Hauptspeichers, mit der Vakuumpumpe kann mittels eines schaltbaren Ventils geöffnet und geschlossen werden. Das schaltbare Ventil kann dabei, ebenso wie die Vakuumpumpe selbst, von der Steuer- und / oder Regeleinheit gesteuert oder geregelt werden. Bei geöffnetem Ventil wird der Druck in dem Hauptspeicher auf einen vorgegebenen ersten Druck abgesenkt, der derart gewählt werden kann, dass in einem mit dem Hauptspeicher verbundenen Vakuumbereich der gewünschte Zieldruck eingestellt werden kann.

Dies kann entweder bei geöffnetem Ventil erfolgen, sodass die Vakuumpumpe den mit dem Hauptspeicher verbundenen Vakuumbereich durch die entsprechende Verbindungsleitung evakuiert, oder bei geschlossenem Ventil, wobei aufgrund des Druckausgleichs durch die Verbindungsleitung ein entsprechend geringerer erster Druck in dem Hauptspeicher eingestellt werden muss, bevor die Verbindungsleitung geöffnet wird. Es versteht sich, dass der Hauptspeicher bevorzugt mit jedem Vakuumbereich durch eine separate Verbindungsleitung verbunden ist, welche jeweils mit einem schaltbaren Ventil versehen ist. Durch Öffnen mehrerer Ventile können bei Bedarf auch mehrere Vakuumbereiche gleichzeitig evakuiert werden. Für die Verbindungsleitungen zwischen den Vakuumbereichen und dem Hauptspeicher ist im Allgemeinen je ein schaltbares Ventil ausreichend, welches bevorzugt an der Schnittstelle zwischen dem Vakuumbereich und der Verbindungsleitung angeordnet ist (siehe unten).

Auch der Hauptspeicher kann analog zu der oben beschriebenen Vakuumschaukel zum teilweisen Recycling eines Vakuums in einem Vakuumbereich verwendet werden. Dazu kann das schaltbare Ventil zwischen dem Vakuumbereich und dem Hauptspeicher zum teilweisen Entlasten des evakuierten Vakuumbereichs geöffnet werden, um einen Druckausgleich zwischen dem Hauptspeicher und dem Vakuumbereich zu schaffen. Nachdem das Ventil wieder geschlossen wurde, kann optional der oben beschriebene Druckausgleich mit einem weiteren, zu evakuierenden Vakuumbereich erfolgen. Anschließend kann der so bereits teilweise entlastete Vakuumbereich geöffnet werden, während der bereits teilweise evakuierte Vakuumbereich zum Druckausgleich in Kommunikation mit dem Hauptspeicher gesetzt wird. Ein Teil des durch diesen Druckausgleich in den Hauptspeicher einströmenden Gases kann hierbei durch Öffnen der Verbindungsleitung zu einem weiteren evakuierten Vakuumbereich wieder aus dem Hauptspeicher herausgesogen werden. Somit muss die Vakuumpumpe lediglich zur Korrektur des im Hauptspeicher vorherrschenden Drucks aufgrund des Unterschieds zwischen dem ausgeglichenen Druck bei Kommunikation mit dem evakuierten Behälter und dem vorgegebenen ersten Druck eingesetzt werden, wodurch der Energiebedarf der Vakuumpumpe erheblich reduziert werden kann.

Gemäß einer weiteren Weiterbildung kann der zentrale Vakuumspeicher weiterhin mindestens einen Recyclingspeicher aufweisen, der mit dem Hauptspeicher und / oder einem Recyclingspeicher über eine oder mehrere abschließbare Verbindungsleitungen verbunden ist, wobei die Vakuumbereiche sowohl mit dem Hauptspeicher als auch mit jedem der Recyclingspeicher verbunden sind. Der mit dem Hauptspeicher verbundene Recyclingspeicher bildet aufgrund eines oder mehrerer in der entsprechenden Verbindungsleitung vorgesehener schaltbarer Ventile eine Vakuumschaukel, die wie bereits mehrfach beschrieben funktioniert. Zweck eines weiteren Speichers in Form des Recyclingspeichers ist dabei ein stufenweises Recyceln des Vakuums in einem Vakuumbereich, wie es oben bereits bei der Kombination Hauptspeicher mit Paar von Vakuumbereichen beschrieben wurde. Vorteilhafterweise wird der Recyclingspeicher somit vorgesehen, um einen zweiten Druck zu speichern, der höher als der erste Druck, aber niedriger als der Ausgleichsdruck zwischen den Vakuumbereichen des Paares ist. Die Ventile der Verbindungsleitungen werden hierbei derart geschaltet, dass ein evakuierter Vakuumbereich zum Vakuumrecycling erst mit dem Hauptspeicher, dann mit dem Recyclingspeicher und optional zuletzt mit dem zu evakuierenden Vakuumbereich des Paares kurzgeschlossen wird. Umgekehrt wird der zu evakuierende Vakuumbereich, falls die entsprechende paarweise Verbindung vorgesehen ist, zuerst mit dem bereits teilweise entlasteten Vakuumbereich des Paares kurzgeschlossen. Anschließend wird der zu evakuierende Vakuumbereich zuerst mit dem Recyclingspeicher und erst dann mit dem Hauptspeicher kurzgeschlossen. Die Ventile der nicht für das Kurzschließen benötigten Verbindungsleitungen sind dabei im Allgemeinen geschlossen, um einen gezielten Druckausgleich zu ermöglichen. Je nach Auslegung der Vorrichtung kann auf die paarweise Verbindung der Vakuumbereiche verzichtet werden, insbesondere wenn nur wenige oder nicht gleichartige Behandlungsstationen vorgesehen sind. In diesem Fall entfallen die entsprechenden Schritte.

Durch gezieltes Öffnen des oder der Ventile zwischen dem Hauptspeicher und dem Recyclingspeicher kann bei Bedarf eine Druckkorrektur in dem Recyclingspeicher analog zu der oben beschriebenen Druckkorrektur im Hauptspeicher durchgeführt werden.

Gemäß einer speziellen Weiterbildung kann der zentrale Vakuumspeicher eine Vielzahl von in Reihe miteinander verbundenen Recyclingspeichern zum Speichern einer Vielzahl von kaskadenartig abnehmenden Unterdrücken umfassen. Von den in Reihe miteinander verbundenen Recyclingspeichern ist somit einer mit dem Hauptspeicher verbunden, während die übrigen Recyclingspeicher wie in einer Serienschaltung miteinander verbunden sind. Wie in der vorigen Weiterbildung ist jeder der Recyclingspeicher mit jedem der Vakuumbereiche durch eine Verbindungsleitung verbunden. Durch Vorsehen von schaltbaren Ventilen an entsprechenden Stellen der Verbindungsleitungen lässt sich gezielt zwischen zwei Recyclingspeichern bzw. zwischen den Vakuumbereichen und den Recyclingspeichern ein Druckausgleich erzielen. Gleiches gilt für die Verbindung des einen Recyclingspeichers mit dem Hauptspeicher.

Die Serienschaltung von Recyclingspeichern kann dabei zum Speichern einer Vielzahl von kaskadenartig abnehmenden Unterdrücken verwendet werden. Beispielsweise kann in dem mit dem Hauptspeicher verbundenen ersten Recyclingspeicher der niedrigste Druck der Kaskade gespeichert werden, wobei der Betrieb dieses Teilsystems analog zu der oben beschriebenen Weiterbildung erfolgt. Der nächste in der Reihe mit dem ersten Recyclingspeicher verbundene Recyclingspeicher kann dann zum Speichern eines höheren Drucks als in dem ersten Recyclingspeicher verwendet werden, wobei dieser Druck abermals geringer als der zu speichernde Druck des nächsten Gliedes in der Reihe ist. Somit nimmt der zu speichernde Druck entlang der Reihe von Recyclingspeichern von dem Hauptspeicher bis zum letzten Recyclingspeicher der Reihe schrittweise zu.

Zum Betrieb des Gesamtsystems wird zunächst der Hauptspeicher mit dem jeweiligen zu entlastenden, evakuierten Vakuumbereich verbunden, um den geringsten Druck des Systems im Hauptspeicher zu recyceln. Anschließend wird der zunehmend entlastete Vakuumbereich sukzessive mit den Recyclingspeichern entlang der Reihe, d. h. mit zunehmenden zu speichernden Drücken, verbunden, sodass das in dem zu entlastenden Vakuumbereich vorliegende Vakuum schrittweise recycelt werden kann. Umgekehrt wird ein zu evakuierender Vakuumbereich zunächst mit dem Recyclingspeicher am Ende der Reihe, d. h. mit dem Recyclingspeicher zum Speichern des höchsten Drucks verbunden, um einen ersten Evakuierungsschritt durchzuführen. Anschließend wird der zu evakuierende Vakuumbereich nacheinander mit den Recyclingspeichern der Reihe in der Reihenfolge abnehmender Drücke verbunden, um den Vakuumbereich schrittweise zu evakuieren. Zuletzt wird der bereits weitgehend evakuierte Vakuumbereich mit dem Hauptspeicher verbunden, um den Vakuumbereich auf den Zieldruck zu evakuieren. Wie bereits oben erwähnt kann durch paarweises Verbinden der Recyclingspeicher untereinander bzw. des ersten Recyclingspeichers mit dem Hauptspeicher der in dem jeweiligen Recyclingspeicher vorherrschende Druck auf den jeweils für den entsprechenden Evakuierungsschritt benötigten Druck korrigiert werden. Dies kann sowohl ausgehend von dem Hauptspeicher als auch ausgehend von dem letzten Recyclingspeicher der Reihe durch sukzessiven, paarweisen Druckausgleich zwischen je zwei Speichern erfolgen.

Gemäß einer Weiterbildung kann der zentrale Vakuumspeicher eine Ringleitung umfassen, die mit der Vielzahl der Vakuumbereiche verbunden ist. Eine solche Ringleitung bietet sich beispielsweise bei einer Vielzahl von entlang der Peripherie eines Rundläufers angeordneten gleichartigen Behandlungsstationen an. Die Ringleitung ist dabei äquivalent zu den oben beschriebenen Speichern als zusammenhängender Raum mit einem wohldefinierten Druck vorgesehen, d. h. die Ringleitung ist durch schaltbare Ventile in den Verbindungsleitungen zwischen der Ringleitung und den Vakuumbereichen von letzteren trennbar. Für jedes Druckniveau kann eine eigene Ringleitung vorgesehen werden, die jeweils mit jedem Vakuumbereich verbunden ist. Die Ringleitungen können des Weiteren mit dem Hauptspeicher und den Recyclingspeichern des zentralen Vakuumspeichers verbunden sein, wobei jede Ringleitung einem der Speicher zugeordnet wird. In einem speziellen Fall kann auf die Speicher verzichtet werden, wobei die Ringleitungen die Aufgabe der Speicher übernehmen. Entsprechend sind die Ringleitungen untereinander analog zu der oben beschriebenen Serienschaltung verbunden.

Gemäß einer weiteren Weiterbildung kann das Volumenverhältnis des zentralen Vakuumspeichers zu den Vakuumbereichen mindestens 2 : 1, bevorzugt mindestens 3 : 1, besonders bevorzugt mindestens 5 : 1 sein. Insbesondere kann das Volumenverhältnis des Hauptspeichers und / oder der Recyclingspeicher zu den Vakuumbereichen entsprechend dimensioniert sein. Beispielsweise können die schaltbaren Ventile der Verbindungsleitungen, wie oben erwähnt, unmittelbar an Vakuumkammern der Vakuumbereiche und insbesondere an der Schnittstelle zwischen den Vakuumbereichen und den Verbindungsleitungen angeordnet werden, um das Volumen der zu evakuierenden Vakuumbereiche möglichst klein zu halten. Da nach dem oben beschriebenen Prinzip der Vakuumschaukel stets ein Druckausgleich auf einen Wert stattfindet, der zwischen den beiden Anfangsdrücken der miteinander verbundenen Volumina liegt, kann der geringere von beiden Drücken niemals vollständig recycelt werden. Das Recycling wird jedoch umso besser, je größer das Volumenverhältnis des Speichers zu dem zu recycelnden Vakuumbereich ist. Auch bei einer Vakuumschaukel zwischen Hauptspeicher und / oder Recyclingspeichern kann das Volumenverhältnis entsprechend derart gewählt werden, dass der jeweilige Speicher deutlich größer als der zu recycelnde Vakuumbereich ist. Mit den oben genannten Werten lassen sich sehr gute Recyclingquoten erreichen, sodass der Energiebedarf der Vakuumpumpe für die unausweichlichen Druckkorrekturen stark reduziert werden kann. Die oben genannten Volumenverhältnisse lassen sich auch bei Verwendung von Ringleitungen als Vakuumspeicher implementieren. In allen Fällen kann das jeweilige Speichervolumen durch Anordnen der schaltbaren Ventile an den Schnittstellen der Vakuumbereiche um das jeweilige Volumen der Verbindungsleitung vergrößert werden.

Gemäß einer Weiterbildung können die Behandlungsstationen je eine Füllvorrichtung zum Befüllen eines Behälters mit einem Füllprodukt innerhalb einer Vakuumkammer aufweisen, wobei der Vakuumbereich die Vakuumkammer umfasst. Wie oben bereits erwähnt, kann das Befüllen von Behältern, insbesondere von Flaschen oder Dosen, unter Unterdruck durchgeführt werden, um den Befüllvorgang zu beschleunigen. Dazu kann der Behälter, insbesondere eine Kunststoffflasche oder Metalldose in einer, beispielsweise zylindrischen, Kammer angeordnet werden, welche als Teil der oben beschriebenen Vakuumbereiche ausgebildet ist und mit den oben beschriebenen Verbindungsleitungen verbunden ist. Insbesondere bei Kunststofflaschen empfiehlt sich die Evakuierung der gesamten Kammer, da ein Druckunterschied zwischen Innenraum und Außenraum der Flasche zur Verformung derselben führen würde. Je nach gewünschtem Unterdruck ist der vorherrschende Druck in der Vakuumkammer selbst nach Befüllen der Flasche noch geringer als der Umgebungsdruck, sodass die oben beschriebene Vakuumschaukel zum Einsatz kommen kann. Geringere Drücke zu Beginn des Füllvorgangs gestatten es, das Befüllen weiter zu beschleunigen, da nur wenig Restgas aus der zu befüllenden Flasche entweichen muss.

Gemäß einer alternativen Weiterbildung können die Behandlungsstationen je eine Blasvorrichtung oder Formfüllvorrichtung zum Ausformen bzw. Ausformen und Befüllen von Kunststoffbehältern innerhalb einer Vakuumkammer aufweisen, wobei der Vakuumbereich die Vakuumkammer umfasst. Auch bei den im Stand der Technik bekannten Blas- bzw. Streckblasvorrichtungen kann die Blasform in einer, beispielsweise zylindrischen, Vakuumkammer angeordnet werden, wobei der in der Blasform erzeugte Unterdruck das Ausformen des Kunststoffbehälters unterstützt. Selbst bei den oben erwähnten Formblasmaschinen ist ein solcher Unterdruck in einer Vakuumkammer beim zumindest teilweisen Ausformen des Preforms zum endgültigen Kunststoffbehälter mit dem einzufüllenden Produkt hilfreich. Auch hier kann die Hohlform zusätzlich in einer Vakuumkammer angeordnet werden. In diesem Fall kann auf Dichtungen der die Hohlform bildenden Formteile verzichtet werden, da der Innendruck der Hohlform durch entsprechende Öffnungen der Hohlform mit dem Innendruck der Vakuumkammer kommuniziert. Bei Verwendung druckdichter Hohlformen kann aber auch die Hohlform selbst den Vakuumbereich definieren. In diesem Fall verfügt die Hohlform über eine oder mehrere Bohrungen, über die sie mit der oder den Verbindungsleitungen verbunden ist. Auch in diesem Fall kann das in den Bohrungen und in den Schnittstellen zu den Verbindungsleitungen vorliegende Teilvakuum recycelt werden.

Gemäß einer weiteren Weiterbildung kann der Vakuumbereich weiterhin ein Totraumvolumen der Verbindungsleitungen umfassen. Unter dem Totraumvolumen eines Vakuumbereichs ist hierbei insbesondere das Volumen der Zuleitungen oder dergleichen zwischen dem schaltbaren Ventil und der eigentlichen Prozesskammer, beispielsweise der Vakuumkammer oder der Hohlform, zu verstehen. Je nach Auslegung der Behandlungsstation kann dieses Totraumvolumen erheblich sein, sodass ein Recycling des darin vorliegenden Teilvakuums energetische Vorteile bringt.

Die oben genannten Aufgaben werden auch durch ein Verfahren zum teilweisen Recyceln eines Vakuums in einer Behälterbehandlungsanlage mit einer Vielzahl von Behandlungsstationen, die jeweils einen abschließbaren Vakuumbereich aufweisen, gelöst, mit den folgenden Schritten: Evakuieren eines ersten Vakuumbereichs auf einen ersten Druck; Durchführen eines Behandlungsschritts an einem Behälter innerhalb des ersten Vakuumbereichs; und Entlasten des ersten Vakuumbereichs zur Entnahme des behandelten Behälters, wobei vor dem Entlasten des ersten Vakuumbereichs eine Verbindung zum Druckausgleich zwischen dem ersten Vakuumbereich und einem zweiten Vakuumbereich mit einem zweiten, höheren Druck und / oder einem zentralen Vakuumspeicher hergestellt wird.

Hierbei können dieselben Variationen und Weiterbildungen, die oben im Zusammenhang mit der erfindungsgemäßen Vorrichtung zum Vakuumrecycling beschrieben wurden, auch auf das Verfahren zum teilweisen Recyceln eines Vakuums angewendet werden. Insbesondere können die oben im Zusammenhang mit dem Betrieb der Vakuumschaukel beschriebenen Verfahren für das Verfahren zum teilweisen Recyceln eines Vakuums Anwendung finden.

Bei den Behandlungsstationen kann es sich insbesondere um die oben beschriebenen Füllvorrichtungen, Blas- bzw. Streckblasvorrichtungen oder Formfüllmaschinen handeln. Entsprechend kann es sich bei dem Behandlungsschritt um das Befüllen eines Behälters, insbesondere einer Flasche oder Dose, mit einem Füllprodukt, beispielsweise einem Getränk, das Blasformen bzw. Streckblasformen eines Kunststoffbehälters, wie beispielsweise einer PET-Flasche, sowie das Ausformen und Befüllen eines Kunststoffbehälters innerhalb einer Hohlform durch Befüllen mit dem im Wesentlichen flüssigen Füllprodukt handeln. Vor dem Evakuieren des Vakuumbereichs kann der zu behandelnde Behälter oder Preform in den Vakuumbereich, beispielsweise eine Vakuumkammer oder eine Hohlform, eingebracht werden, der dann druckdicht abgeschlossen wird. Dazu kann beispielsweise eine Schleuse vorgesehen werden. Anschließend wird der erste Vakuumbereich auf den ersten Druck, den Zieldruck, evakuiert, der je nach Behandlungsschritt im Bereich von 0,1 bis 0,9 bar, bevorzugt von 0,3 bis 0,8 bar, besonders bevorzugt von 0,5 bis 0,7 bar liegen kann. Es ist anzumerken, dass der in dem Vakuumbereich vorherrschende Druck durch das Durchführen des Behandlungsschritts verändert und insbesondere vergrößert werden kann. Der Einfachheit halber wird hier und im Folgenden der nach dem Behandlungsschritt vorliegende Druck als gleich dem ersten Druck bzw. Zieldruck nach der Evakuierung des Vakuumbereichs gesetzt. Bei durch den Behandlungsschritt verändertem Druck kann selbstverständlich der dann vorherrschende Unterdruck äquivalent recycelt werden, wobei jedoch eine zusätzlich Pumpleistung zur Kompensation für die Druckänderung durch die Behandlung erforderlich wird.

Zur Entnahme des behandelten Behälters muss der Vakuumbereich zwingend geöffnet werden, sodass das darin vorherrschende Teilvakuum entlastet wird. Erfindungsgemäß wird daher vor dem Entlasten des ersten Vakuumbereichs, wie oben en detail beschrieben, eine Verbindung zum Druckausgleich zwischen dem ersten Vakuumbereich und einem zweiten Vakuumbereich mit einem zweiten, höheren Druck und / oder einem zentralen Vakuumspeicher hergestellt. Insbesondere kann es sich bei den Vakuumbereichen um die Vakuumbereiche einer Vielzahl von gleichartigen Behandlungsstationen handeln. Der zweite, höhere Druck kann insbesondere der Umgebungsdruck sein, der nach dem Einbringen eines zu behandelnden Behälters oder Preforms in den zweiten Vakuumbereich in diesem vorherrscht. Durch den Druckausgleich zwischen dem ersten und zweiten Vakuumbereich wird somit eine Teilevakuierung des zweiten Vakuumbereichs vorgenommen, wodurch das im ersten Vakuumbereich vorliegende Teilvakuum teilweise recycelt wird. Der Druckausgleich geht wie oben beschrieben kontrolliert durch gesteuertes bzw. geregeltes Öffnen und Schließen entsprechender an den Verbindungsleitungen vorgesehener Ventile vonstatten. Eine dafür vorgesehene Steuer- und/oder Regeleinheit kann dazu eine Vielzahl schaltbarer Ventile steuern bzw. regeln.

Ergänzend oder alternativ kann wie oben beschrieben ein Teil des Vakuums auch durch Druckausgleich mit einem zentralen Vakuumspeicher recycelt werden. Auch hierzu öffnet und schließt eine Steuer- und / oder Regeleinheit gezielt die entsprechenden Ventile an den Verbindungsleitungen zwischen dem zentralen Vakuumspeicher und der Vielzahl der Vakuumbereiche.

Das in dem zentralen Vakuumspeicher "teilweise gespeicherte" Vakuum des ersten Vakuumbereichs kann gemäß einer Weiterbildung durch Herstellen einer Verbindung zum Druckausgleich zwischen dem zweiten Vakuumbereich und dem zentralen Vakuumspeicher teilweise an den zweiten Vakuumbereich weitergegeben werden. Dadurch kann wie erwähnt ein zu evakuierender Vakuumbereich bereits teilweise evakuiert werden. Eine mit dem zentralen Vakuumspeicher verbundene Vakuumpumpe muss dann lediglich den Differenzdruck zum Zieldruck ausgleichen. Wie oben beschrieben kann jedoch auch zunächst der Druck des zentralen Vakuumspeichers mittels der Vakuumpumpe auf einen Druck reduziert werden, der derart unter dem Zieldruck liegt, dass ein Druckausgleich zwischen zentralem Hauptspeicher und zweitem Vakuumbereich nach Trennen des zentralen Vakuumspeichers von der Vakuumpumpe zum gewünschten Zieldruck führt. Weitere Weiterbildungen, wie beispielsweise das oben beschriebene kombinierte Recycling mittels aufeinanderfolgenden Druckausgleichs zwischen dem ersten Vakuumbereich und dem zentralen Vakuumspeicher und zwischen dem ersten und dem zweiten Vakuumbereich, sind ebenso möglich.

Gemäß einer weiteren Weiterbildung kann das Herstellen der Verbindung zwischen dem zweiten Vakuumbereich und dem zentralen Vakuumspeicher das aufeinanderfolgende Herstellen einer Verbindung zwischen dem zweiten Vakuumbereich und mindestens einem Recyclingspeicher des zentralen Vakuumspeichers mit einem dritten Druck, der niedriger als der zweite Druck ist, und einer Verbindung zwischen dem zweiten Vakuumbereich und einem Hauptspeicher des zentralen Vakuumbereichs mit einem vierten Druck, der niedriger als der dritte Druck ist, umfassen. Somit findet das Vakuumrecycling wie oben bereits ausführlich beschrieben in zwei oder mehr Schritten statt, wobei der dritte Druck des Recyclingspeichers höher als der vierte Druck des Hauptspeichers ist. Letzterer ist schlussendlich dafür verantwortlich, dass der zu evakuierende zweite Vakuumbereich auf den Zieldruck evakuiert wird. Wie oben beschrieben lässt sich durch Reihenschaltung mehrerer Recyclingspeicher auch ein kaskadenartiges Recyceln des Vakuums realisieren. Dazu werden der zu evakuierende Vakuumbereich bzw. der evakuierte Vakuumbereich nacheinander mit dem Hauptspeicher und den Recyclingspeichern zum Druckausgleich verbunden, wobei die Abfolge der Verbindungen für den zu evakuierenden Vakuumbereich invertiert zur Abfolge der Verbindungen für den evakuierten Vakuumbereich ist. Weiterhin lässt sich das Verfahren zum Vakuumrecycling mittels Hauptspeicher und Recyclingspeicher(n) auch mit der paarweisen Vakuumschaukel zwischen gleichartigen Vakuumbereichen kombinieren.

Gemäß einer speziellen Weiterbildung kann das Verfahren weiterhin das Evakuieren des Hauptspeichers des zentralen Vakuumspeichers auf den vierten Druck umfassen. Dieses Evakuieren kann durch gezieltes Verbinden des Hauptspeichers mit der Vakuumpumpe erfolgen. Dabei kann der vierte Druck, wie erwähnt, unter dem Zieldruck liegen. Das Evakuieren des Hauptspeichers auf den vierten Druck kompensiert dabei das aufgrund des endlichen Volumenverhältnisses zwischen Vakuumspeicher und Vakuumbereich unzulängliche Recycling des Vakuums des ersten Vakuumbereichs. Aufgrund der Vakuumschaukel fällt diese notwendige Druckkorrektur jedoch erheblich kleiner aus als ohne Vakuumrecycling, sodass der Energiebedarf der Vakuumpumpe deutlich reduziert werden kann.

Anstatt der eben beschriebenen Verfahren und Vorrichtungen können die Vorformlinge auch direkt von einer stromaufwärts angeordneten Spritzgussvorrichtung erzeugt und im noch aufgewärmten Zustand zu der Form- und Füllvorrichtung weitertransportiert werden. Energetisch gesehen bietet das den Vorteil, dass ein Teil der Wärme nicht an die Umgebung verloren geht. Unter Umständen muss jedoch noch eine Zwischenkonditioniereinrichtung vorgesehen werden, welche die Vorformlinge nur geringfügig temperiert (kleiner als plus oder minus 50°C) bzw. ein Temperaturprofil aufbringt. Werden die Vorformlinge innerhalb eines Reinraums spritzgegossen, so ist unter Umständen keine weitere Sterilisation der Vorformlinge nötig, wenn sich der Reinraum bis zu einer Position hin erstreckt, an der ein Verschluss auf den Behälter nach dem Befüllen aufgebracht wird.

Insbesondere findet die Herstellung bzw. Expansion und das Befüllen der Behälter innerhalb eines Raums mit kontaminationsarmer Umgebung statt. Die kontaminationsarme Umgebung, bei der es sich insbesondere um einen Reinraum handelt, kann durch eine oder Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre gesetzt, indem durch Feinfilter filtrierte Luft zumindest während der Produktion in den Raum eingeblasen wird.
- Die Antriebe für verschiedenste Bewegungen der Kavität sind außerhalb des Reinraums angeordnet, so beispielsweise die Antriebe für das Öffnen und Schließen der Kavität (Form) und/oder die für das Bewegen einer Reckstange und/oder die für ein Anheben oder Senken eines Behälters und/oder die Bewegung einer Blas- oder Fülldüse.
- Die innere Wandung des Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- Die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Insbesondere werden die Behälter bzw. Vorformlinge vor einem Einbringen in die kontaminationsarme Umgebung sterilisiert.

In der Vorrichtung und bei dem Verfahren können auch andere Behälter behandelt werden, beispielsweise Dosen, Beutel oder andere mit der Hand leicht verformbare Behälter.

Das abzufüllende Produkt (Wasser, Cola) kann ebenfalls in einem Verteiler, insbesondere in einer Ringleitung, zu den Behandlungsstationen transportiert werden. Insbesondere herrscht in dem Verteiler ein Überdruck, um das Produkt noch schneller aufzufüllen. Insbesondere herrscht dort ein Überdruck von 1,1 bis 10 bar, bevorzugt zwischen 2 und 5 bar Überdruck.

Das Produkt wird insbesondere über einen Drehverteiler von einem stationären Teil der Maschine in einen drehenden Teil der Maschine (Trägerrad) geleitet.

Im Drehverteiler können noch weitere Spuren neben dem Produkt vorgesehen sein, beispielsweise eine für das Vakuum, wenn die Pumpe im stationären Teil der Vorrichtung angeordnet ist. Handelt es sich um eine Formfüllmaschine, so kann noch eine weitere Spur für unter Überdruck stehendes Gas zur Ausformung der Behälter vorgesehen sein.

Ebenfalls kann eine Spur zum Zurückleiten von Gas (Recycling) oder für Reinigungsmedien (CIP) vorgesehen sein.

Vom Drehverteiler werden die Medien insbesondere auf einzelne Behandlungsstationen verteilt. Dies kann über an den Drehverteiler angeschlossene Ringleitungen erfolgen, von welchen sich Leitungen sternförmig zu den einzelnen Stationen abzweigen oder über einen mit dem Drehverteiler verbundenen, zentralen Tank, von dem wiederrum einzelne Leitungen sternförmig zu den Stationen geführt sind.

Handelt es sich um einen Rundläufer, so sind in dessen Peripherie insbesondere ein Einlaufstern und ein Auslaufstern vorgesehen, welche Behälter dem Rundläufer zuführen, bzw. Behälter aus dem Rundläufer entnehmen. Auf dem Rundläufer werden die Behälter insbesondere nur während eines Winkels von 270° bis 350° behandelt, je nachdem, wie nah der Ein- und der Auslaufstern nebeneinander gestellt werden können.

Insbesondere wird innerhalb der ersten 20°, insbesondere 10°, Behandlungswinkel der Vakuumbereich einer Behandlungsstation durch die Verbindung des Bereichs mit einem Vakuumbereich einer anderen Behandlungsstation auf einen ersten Druck teilweise evakuiert. Anschlieβend wird während eines Behandlungswinkels von weiteren 20°, bevorzugt 10°, der Vakuumbereich auf einen zweiten Druck evakuiert, der geringer ist als der erste Druck, und zwar durch Verbindung des Vakuumbereichs mit der Vakuumpumpe.

Der Transportpfad der Behälter ist insbesondere mäanderförmig.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 zeigt eine schematische Aufsicht einer beispielhaften Ausführung eines Rundläufers mit einer Vielzahl von gleichartigen Behandlungsstationen.
Figur 2 zeigt eine Seitenansicht einer exemplarischen Ausführung einer Behandlungsstation in Form einer Formfüllmaschine.
Figur 3 zeigt eine Seitenansicht einer weiteren exemplarischen Ausführung einer Behandlungsstation in Form einer Füllvorrichtung.
Figur 4 zeigt eine beispielhafte Ausführung einer Vorrichtung zum Vakuumrecycling mit Paaren von Vakuumbereichen und einem zentralen Vakuumspeicher.
Figur 5 zeigt eine alternative Ausführung einer Vorrichtung zum Vakuumrecycling mit einem Hauptspeicher und einem Recyclingspeicher als Teil des zentralen Vakuumspeichers.

Im Folgenden sind gleiche oder gleichartige Elemente mit gleichen Bezugszeichen bezeichnet. Auf eine wiederholte Beschreibung dieser Elemente wird aus Gründen der Klarheit verzichtet. Zudem versteht sich, dass in den folgenden Ausführungsformen einige oder alle Elemente durch gleichartige, im Zusammenhang mit anderen Ausführungsformen beschriebene Elemente ersetzt oder kombiniert werden können.

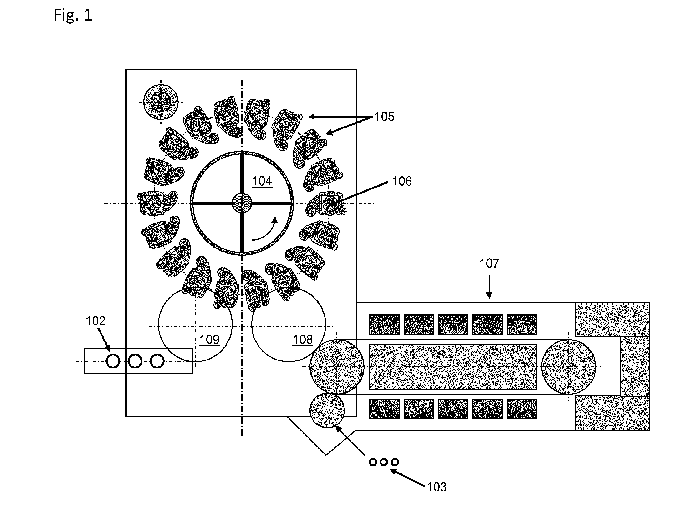

Figur 1 zeigt eine schematische Aufsicht einer beispielhaften Ausführung eines Rundläufers mit einer Vielzahl von gleichartigen Behandlungsstationen. Die Vorrichtung kann beispielsweise zur Herstellung oder zur Herstellung und zum gleichzeitigen Befüllen von Kunststoffbehältern dienen. Beispielsweise kann eine Vielzahl von Behandlungsstationen 105 in Form der weiter unten beschriebenen Formfüllmaschinen entlang des Umfangs des Rundläufers 104 angeordnet sein und mit diesem umlaufen. Jede der umlaufenden Behandlungsstationen umfasst dabei eine Hohlform 106 zum Ausformen und Befüllen der Kunststoffbehälter. Das Ausformen und Befüllen der Kunststoffbehälter kann wie oben beschrieben durch Erzeugen eines Teilvakuums unterstützt werden. Zu diesem Zweck weisen die Behandlungsstationen individuelle Vakuumbereiche auf.

Insbesondere ist eine Vielzahl von Form- und Füllstationen vorgesehen, welche insbesondere am Außenumfang eines sich kontinuierlich drehenden Rundläufers angeordnet sind. Bei dem Rundläufer handelt es sich vorzugsweise um ein Rad.

Der Rundläufer dreht sich insbesondere um eine vertikale Achse, deren Verlängerung den Erdmittelpunkt schneidet.

Insbesondere sind die Stationen alle in äquidistanten Abständen zueinander angeordnet. Die Stationen weisen insbesondere Kavitäten auf, innerhalb derer die Behälter gegen die inneren Wände der Kavität expandiert werden, so dass die fertig ausgeformten Behälter die (negative) Form der inneren Wände der Kavität erhalten.

Die in der Figur schematisch dargestellten Preformen (Vorformlinge) 103 laufen durch einen Ofen 107, beispielsweise einen Infrarotofen oder einen Mikrowellenofen, in dem die Preformen 103 mit einem gewünschten Temperaturprofil entlang ihrer Längsachse erhitzt werden. Während es sich beim Mikrowellenofen bevorzugt um einen Rundläufer handelt, werden die Vorformlinge beim Infrarotofen zumindest einen Teil der Strecke geradlinig transportiert. Die erhitzten Preformen 103 werden dann über einen Einlaufstern 108 an den Rundläufer 104 übergeben und dabei insbesondere in die geöffneten Hohlformen 106 eingebracht. Dazu müssen die Hohlformen 106 auf Umgebungsdruck entlastet werden. Während des Umlaufs um den Rundläufer 104 werden die Preformen innerhalb der nunmehr geschlossenen und teilweise evakuierten Hohlformen 106 der Behandlungsstationen 105 ausgeformt und befüllt. Vor Übergabe an einen Auslaufstern 109 werden die Hohlformen wieder geöffnet, um die nunmehr vollständig ausgeformten und befüllten Kunststoffbehälter entnehmen zu können. Das in dem Ofen 107 aufgebrachte Temperaturprofil kann dabei in Abhängigkeit von der gewünschten Form des Kunststoffbehälters und dessen Material vorgegeben werden. Öfen zum Vorerhitzen von Preformen sind im Stand der Technik hinreichend bekannt und werden daher hier nicht weiter beschrieben. Von dem Auslaufstern 109 können die fertigen und befüllten Behälter 102 zur weiteren Behandlung an ein Transportband übergeben werden.

Insbesondere ist daran gedacht, die Behälter noch innerhalb dieser Kavität zu verschließen. Hierfür kann an der Peripherie des Rundläufers eine Verschlusszuführung angeordnet sein.

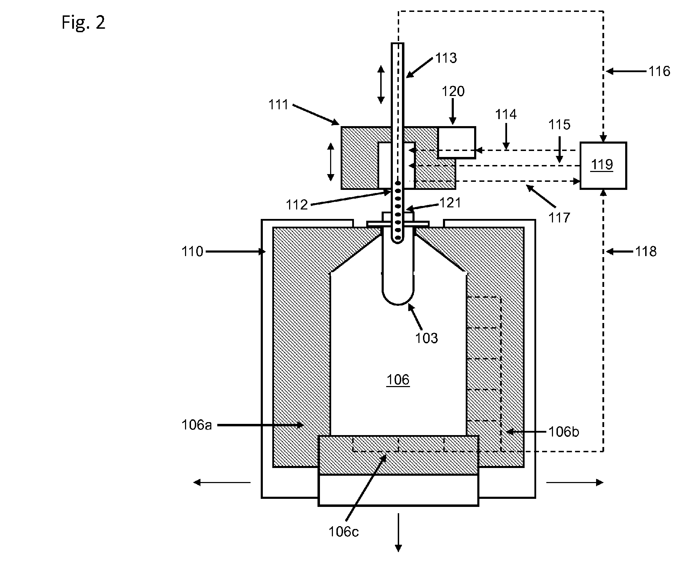

Figur 2 zeigt eine Seitenansicht einer exemplarischen Ausführung einer Behandlungsstation in Form einer Formfüllmaschine. Die Formfüllmaschine umfasst eine Form, die als Hohlform ausgebildet ist, wobei die Form in der hier dargestellten nicht limitierenden Ausführung aus zwei mittels eines mehrteiligen Formträgers 110 in die Pfeilrichtungen verfahrbaren bzw. verschwenkbaren Seitenteilen 106a und 106b und einem entlang der Pfeilrichtung verfahrbaren Bodenteil 106c besteht. Nach Einbringen eines Preforms 103 wird die Form, so wie allgemein bekannt, durch Zusammenfahren der Formteile 106a-c geschlossen.

Die Form kann dabei derart ausgebildet werden, dass sie druckdicht mit dem Preform 103 abschließt und somit eine druckdichte Hohlform 106 bildet, die mittels eines Medienverteilers 119, beispielsweise eines gemeinsamen Drehverteilers für die Vielzahl der Behandlungsstationen, über Vakuumleitungen 118 und Bohrungen in der Hohlform zur Unterstützung des Ausformvorgangs auf Unterdruck evakuiert werden kann.

Alternativ oder ergänzend kann die Hohlform 106 im Innenraum eines Vakuumbehälters (nicht dargestellt) angeordnet werden, welcher über die Vakuumleitungen 118 evakuiert werden kann. Innerhalb dieses Vakuumbehälters können dann ein Druckkissen zum Zusammenhalten der Formschalen der Hohlform während des Formprozesses, ein Träger für die Formschalen und/oder Anschlüsse für die Temperierung der Formschalen oder des Trägers angeordnet sein. Insbesondere kann der Vakuumbehälter mit mindestens zwei beweglichen Teilen versehen sein. Insbesondere können diese beweglichen Teile mit den Antrieben des Trägers für die Formschalen zum Ein- und Ausbringen gekoppelt werden. Die Träger sind insbesondere an einer Welle schwenkbar gelagert und buchartig offenbar.

Die Vakuumleitungen 118 stellen eine schematische Ausführung der oben beschriebenen Verbindungsleitungen dar, wobei der Drehverteiler 119 beispielsweise mit einer Ringleitung als zentralem Vakuumspeicher verbunden sein kann.

Die vorliegende Erfindung ist jedoch explizit nicht auf die hier exemplarisch gezeigte Ausführung beschränkt, sondern umfasst insbesondere die weiter unten beschriebenen Anordnungen. Die Hohlform 106, inklusive des Totraums der Verbindungsleitungen 118, optional zusammen mit einer Vakuumkammer, bildet dabei den Vakuumbereich einer Formfüllmaschine, dessen Teilvakuum es zu recyceln gilt.

Beim Formfüllverfahren kann durch lineares Verfahren, entsprechend der im Stand der Technik bekannten Blasdüse, eine Fluiddüse eines Ventilblocks 111 druckdicht auf den Mündungsbereich 121 des Preforms aufgesetzt werden, über die Medien und / oder Füllprodukte in den Preform bzw. den auszuformenden Kunststoffbehälter mit dem jeweils gewünschten Druck eingespritzt bzw. -geblasen werden können. Zu diesem Zweck ist der Ventilblock 111 über eine Zuführleitung für ein Formfluid 114 und / oder eine Zuführleitung für ein Füllprodukt 115 mit dem Medienverteiler 119 verbunden. Regelbare Ventile im Ventilblock 111 regeln dabei die Zufuhr von Formfluid und / oder Füllprodukt. Bei dem Formfluid kann es sich um ein gasförmiges Medium handeln, welches beispielsweise mit einem Kompressor 120 auf den zum Ausformen des Preforms erforderlichen Druck komprimiert wird. Alternativ kann das Formfluid jedoch auch ein Füllprodukt sein. Auch in diesem Fall kann, insbesondere in Abhängigkeit von dem auszuformenden Material und dem Füllprodukt, ein geeigneter Überdruck in dem Fluid erzeugt werden. Gleiches gilt für das Füllprodukt in der Zuführleitung 115, wobei gemäß einer Weiterbildung ein Teil des Ausformens des Behälters mit diesem Füllprodukt vorgenommen werden kann.

Zum Streckformen kann die hier dargestellte, nicht limitierende Formfüllmaschine weiterhin eine Reckstange 113 aufweisen, die entlang der gezeigten Pfeilrichtung in den Preform hineingefahren werden kann, um den Preform auf seine Solllänge, die der Höhe des fertigen Kunststoffbehälters entspricht, zu recken. Bei Verwendung einer hohlgebohrten Reckstange 113 kann weiterhin über eine hier exemplarisch als Absaugleitung 116 gezeigte Verbindung mit dem Medienverteiler 119 bereits eingefülltes Medium oder Füllprodukt wieder aus dem Behälter entweichen oder aktiv abgezogen werden. Auch kann die Reckstange 113 zum Befüllen und / oder weiteren Ausformen des Behälters verwendet werden. Dazu kann die Reckstange 113 an ihrem der Hohlform zugewandten Ende eine Öffnung und / oder entlang ihrer Längsrichtung angeordnete Öffnungen aufweisen. Letztere können insbesondere zum effektiven Durchmischen warmen und kalten Füllprodukts dienen.

Es versteht sich, dass die in Figur 2 gezeigte Anordnung, insbesondere der Vakuumleitungen, lediglich eine exemplarische Weiterbildung darstellt. Eine Vielzahl alternativer Weiterbildungen ist denkbar, von denen im Folgenden einige explizit beschrieben werden.

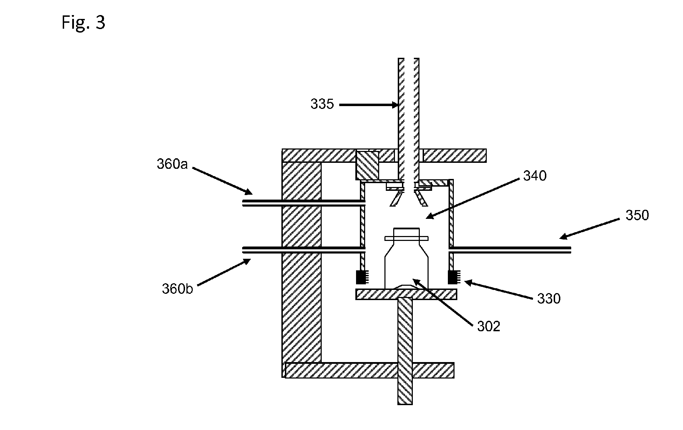

Die oben beschriebenen Vorrichtungen und Verfahren zum Vakuumrecycling können auch in Kombination mit einer Vielzahl von (nur) Füllvorrichtungen als Behandlungsstationen 105 auf einem Trägerrad eines Rundläufers 104 eingesetzt werden. Figur 3 zeigt beispielsweise eine Seitenansicht einer exemplarischen Ausführung einer Behandlungsstation in Form einer Füllvorrichtung. Durch vertikales Verfahren des zu befüllenden Behälters 302 wird eine aufgrund von Dichtungen 330 druckdichte, beispielsweise zylindrische, Vakuumkammer 340 gebildet, in welcher der Behälter 302 unter Unterdruck besonders schnell befüllt werden kann.

Dazu wird die nunmehr geschlossene Vakuumkammer 340 auf den gewünschten Zieldruck evakuiert und anschließend Füllprodukt über die Zuführleitung 335 mit Füllventil in den Behälter eingefüllt. In der hier dargestellten, nicht limitierenden Weiterbildung weist die Vakuumkammer 340 drei Verbindungsleitungen auf, über welche der gewünschte Zieldruck in der Vakuumkammer eingestellt werden kann. Eine erste Verbindungsleitung 350 verbindet die Vakuumkammer mit einer weiteren Vakuumkammer (nicht dargestellt), um einen Druckausgleich in dem gebildeten Paar von Vakuumbereichen, die die jeweiligen Vakuumkammern umfassen, schaffen zu können. Eine zweite Verbindungsleitung 360a kann beispielsweise vorgesehen sein, um die Vakuumkammer 340 wie oben beschrieben mit dem Hauptspeicher eines zentralen Vakuumspeichers zu verbinden. Eine dritte Verbindungsleitung 360b schließlich kann vorgesehen sein, um die Vakuumkammer 340 mit einem Recyclingspeicher des zentralen Vakuumspeichers zu verbinden. Weitere Verbindungsleitungen, beispielsweise zu weiteren Recyclingspeichern und / oder weiteren Vakuumkammern, sind möglich. Ebenso können einzelne der oben genannten Verbindungsleitungen entfallen.

Die Verbindungsleitungen 350, 360a und 360b sind mit schaltbaren Ventilen (nicht dargestellt) ausgestattet, welche bevorzugt unmittelbar an der Vakuumkammer 340, beispielweise an der Wand der Vakuumkammer, angeordnet sind. Dadurch lässt sich das Totraumvolumen der Zuleitungen zur Vakuumkammer reduzieren und ein besseres Volumenverhältnis zwischen Vakuumspeicher und Vakuumbereich realisieren. Über eine Steuer- und / oder Regeleinheit (nicht dargestellt) können die Ventile einzeln und gezielt geöffnet und geschlossen werden, sodass gezielt ein Druckausgleich zwischen dem die Vakuumkammer 340 umfassenden Vakuumbereich und einem weiteren Vakuumbereich bzw. dem zentralen Vakuumspeicher hergestellt werden kann.

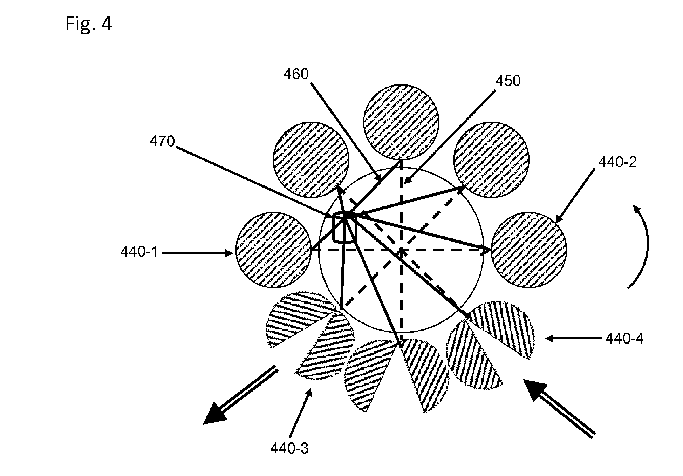

Figur 4 zeigt eine beispielhafte Ausführung einer Vorrichtung zum Vakuumrecycling mit Paaren von Vakuumbereichen und einem zentralen Vakuumspeicher. Gemäß dieser Ausführung umfasst jede Vakuumkammer zwei Verbindungsleitungen. Die mit gestrichelten Linien dargestellten Verbindungsleitungen 450 verbinden jeweils zwei entlang des Umfangs des Rundläufers gegenüberliegende Vakuumkammern miteinander, während die mit durchgezogenen Linien dargestellten Verbindungsleitungen 460 die Vakuumkammern mit einem zentralen Vakuumspeicher in Form eines Hauptspeichers 470 verbinden. Ein Pfeil deutet den Umlaufsinn der Vakuumkammern an.

Wie durch einen weiteren Pfeil schematisch dargestellt, wird ein zu behandelnder Behälter an eine geöffnete Vakuumkammer 440-4 übergeben, an welcher der Umgebungsdruck anliegt. Nach Schließen der Vakuumkammer 440-2 wird diese über die Verbindungsleitung 450 zu der gegenüberliegenden Vakuumkammer 440-1 teilweise evakuiert. Da in der Vakuumkammer 440-1 selbst nach dem Durchführen des Behandlungsschritts noch ein Teilvakuum vorliegt, kann der Druck in der zu evakuierenden Vakuumkammer 440-2, wie oben en detail beschrieben, durch Druckausgleich mit der Vakuumkammer 440-1 gesenkt werden, sodass das in der Vakuumkammer 440-1 vorliegende Teilvakuum teilweise recycelt werden kann.

Vor diesem Druckausgleich mit der Vakuumkammer 440-2 kann jedoch zunächst die Verbindungsleitung 460 zwischen der zu entlastenden Vakuumkammer 440-1 und dem Hauptspeicher 470 des zentralen Vakuumspeichers geöffnet werden, da der Druck innerhalb des Hauptspeichers 470 erfindungsgemäß unter dem Ausgleichsdruck des Paares von Vakuumkammern 440-1 und 440-2 liegt. Auf diese Weise kann das in der Vakuumkammer 440-1 vorliegende Teilvakuum in zwei Schritten effektiver recycelt werden, als wenn lediglich ein Druckausgleich zwischen den Vakuumkammern 440-1 und 440-2 stattfände.

Entsprechend kann nach erfolgtem Druckausgleich zwischen den Vakuumkammern 440-1 und 440-2 ein Druckausgleich zwischen der dann bereits teilevakuierten Vakuumkammer 440-2 und dem Hauptspeicher 470 durch Öffnen der entsprechenden Verbindungsleitung 460 erfolgen. Wie oben beschrieben ist der Druck in dem Hauptspeicher 470 derart eingestellt bzw. der Hauptspeicher 470 derart mit einer Vakuumpumpe (nicht dargestellt) verbunden, dass durch den Druckausgleich der gewünschte Zieldruck in der Vakuumkammer 440-2 erreicht wird. Die nunmehr teilweise entlastete Vakuumkammer 440-3 wird anschließend geöffnet, um den behandelten Behälter, wie durch den Pfeil in der Figur angedeutet, entnehmen zu können.

In der hier dargestellten, nicht limitierenden Weiterbildung sind die Vakuumkammern jeweils mit der gegenüberliegenden Vakuumkammer verbunden, sodass sich separate Paare von Vakuumkammern bilden, die lediglich über ihre Verbindungsleitungen 460 mit dem Hauptspeicher 470 indirekt in Kommunikation stehen. Es sind jedoch auch alternative Weiterbildungen denkbar, bei denen jede Vakuumkammer mit mehr als einer weiteren Vakuumkammer verbunden ist, um Gruppen von Vakuumkammern zu bilden. Auch muss das Paar nicht zwingend aus gegenüberliegenden Vakuumkammern bestehen, solange stets eine zu entlastende Vakuumkammer mit einer zu evakuierenden Vakuumkammer verbunden werden kann. Vorteilhaft ist jedoch das Vorsehen separater Verbindungsleitungen 460 mit dem Hauptspeicher 470, da dadurch bei Anordnung der schaltbaren Ventile an den Vakuumkammern das Volumenverhältnis des Vakuumspeichers zum Vakuumbereich vergrößert werden kann. Anders als in der Figur dargestellt, kann der Hauptspeicher 470 insbesondere symmetrisch bzgl. der Vakuumkammern angeordnet sein, sodass die jeweiligen Verbindungsleitungen 460 gleich lang sind.

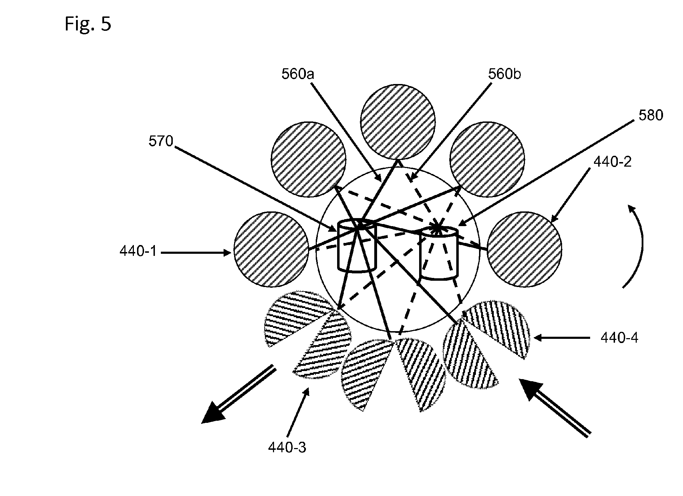

Figur 5 zeigt eine alternative Ausführung einer Vorrichtung zum Vakuumrecycling mit einem Hauptspeicher 570 und einem Recyclingspeicher 580 als Teil des zentralen Vakuumspeichers. In der dargestellten, nicht limitierenden Weiterbildung sind keine Verbindungsleitungen zwischen den Vakuumkammern vorgesehen. Es versteht sich jedoch, dass die gezeigte Weiterbildung, wie oben beschrieben, um solche Verbindungsleitungen zum Bilden von Paaren von Vakuumkammern ergänzt werden kann.

In der dargestellten Weiterbildung umfasst der zentrale Vakuumspeicher einen Hauptspeicher 570 und einen Recyclingspeicher 580. Bevorzugt sind der Hauptspeicher 570 und der Recyclingspeicher 580 durch eine Verbindungsleitung zum kontrollierten Druckausgleich (nicht dargestellt) miteinander verbunden, über welche der Druck im Recyclingspeicher 580 korrigiert werden kann. Wie oben beschrieben kann auch eine Reihe von in Serienschaltung miteinander verbundenen Recyclingspeichern vorgesehen sein, deren erster Recyclingspeicher mit dem Hauptspeicher 570 verbunden ist. Entsprechend ergeben sich weitere Verbindungsleitungen zwischen den Recyclingspeichern und den Vakuumkammern. Mit einer Reihe von Recyclingspeichern lässt sich, wie oben ausgeführt, eine Kaskade abnehmender Drücke speichern, um ein möglichst effizientes Evakuieren der zu evakuierenden Vakuumkammer 440-2 zu ermöglichen.

Wie in Figur 4 wird ein zu behandelnder Behälter in die offene Vakuumkammer 440-4 einge-bracht, welche anschließend geschlossen wird. Die nunmehr geschlossene Vakuumkammer 440-2 wird über einen ersten Druckausgleich über eine mit einer gestrichelten Linie dargestellte Verbindungsleitung 560b mit dem Recyclingspeicher 580 teilevakuiert, da erfindungsgemäß ein höherer Druck im Recyclingspeicher 580 vorliegt als im Hauptspeicher 570. Anschließend wird die teilevakuierte Vakuumkammer 440-2 über eine mit einer durchgezogenen Linie dargestellte Verbindungsleitung 560a mit dem Hauptspeicher 570 auf den Zieldruck evakuiert, wobei eine mit dem Hauptspeicher verbundene Vakuumpumpe zum Einsatz kommen kann.

Umgekehrt wird die evakuierte Vakuumkammer 440-1 in einem ersten Entlastungsschritt über die Verbindungsleitung 560a mit dem Hauptspeicher 570 verbunden, um das in der Vakuumkammer vorliegende Vakuum teilweise in dem Hauptspeicher, in dem ein geringerer Druck als in dem Recyclingspeicher 580 vorliegt, zu recyceln. Anschließend wird die bereits teilweise entlastete Vakuumkammer 440-1 über die Verbindungsleitung 560b mit dem Recyclingspeicher 580 verbunden, um einen weiteren Teil des Teilvakuums zu recyceln. Schließlich wird die Vakuumkammer 440-3 geöffnet, um den behandelten Behälter zu entnehmen. Auch hier ist das Vorsehen separater Verbindungsleitungen für jede Vakuumkammer vorteilhaft, wobei der Hauptspeicher 570 und der Recyclingspeicher 580 insbesondere symmetrisch bzgl. der Vakuumkammern angeordnet werden können, um gleich lange Verbindungsleitungen 560a bzw. 560b zu schaffen.

Die dargestellten Weiterbildungen erlauben das teilweise Recyceln einer zu entlastenden Vakuumkammer, indem die Entlastung teilweise durch Druckausgleich mit einem zentralen Vakuumspeicher und / oder einer zu evakuierenden Vakuumkammer erfolgt. Dadurch kann der Energiebedarf einer Vakuumpumpe, welche schlussendlich die zu evakuierende Vakuumkammer auf den Zieldruck evakuiert, reduziert werden. Durch mehrstufiges Recycling kann die Rückgewinnung der Vakuumpumpleistung verbessert werden, wobei insbesondere ein großes Volumenverhältnis zwischen Vakuumspeicher und Vakuumkammer von Vorteil ist. Durch Anordnen der Ventile an den Vakuumkammern kann das Volumen der benötigten Verbindungsleitungen fast vollständig dem Speichervolumen zugeschlagen werden. Eine Ringleitung kann auf elegante Weise eine symmetrische Verteilung der Volumina der Verbindungsleitungen ermöglichen.

## Patentansprüche

1. Vorrichtung zum Vakuumrecycling in einer Behälterbehandlungsanlage, umfassend eine Vielzahl von Behandlungsstationen (105), die jeweils einen abschließbaren Vakuumbereich (106, 340, 440) aufweisen,
**gekennzeichnet durch**
eine Vielzahl von Verbindungsleitungen (118; 350, 360a, 360b; 450, 460; 560a, 560b), die die Vakuumbereiche (106, 340, 440) miteinander und / oder mit einem zentralen Vakuumspeicher (470; 570, 580) verbinden, und
eine Steuer- und/oder Regeleinheit, die derart ausgebildet ist, dass ein in einem Vakuumbereich (440-1) erzeugtes Vakuum teilweise an einen anderen Vakuumbereich (440-2) und / oder den zentralen Vakuumspeicher (470; 570, 580) weitergeschaltet wird.

2. Vorrichtung nach Anspruch 1, weiterhin eine Vielzahl schaltbarer Ventile umfassend, die an den Schnittstellen zwischen den Vakuumbereichen (106, 340, 440) und den Verbindungsleitungen (118; 350, 360a, 360b; 450, 460; 560a, 560b) angeordnet sind, wobei die Steuer- und / oder Regeleinheit zum kontrollierten Öffnen und Schließen der schaltbaren Ventile ausgebildet ist.

3. Vorrichtung nach Anspruch 1 oder 2, wobei die Vakuumbereiche (440-1, 440-2) paarweise miteinander verbunden sind.

4. Vorrichtung nach einem der Ansprüche 1 bis 3, wobei der zentrale Vakuumspeicher einen Hauptspeicher (470; 570) umfasst, der mit einem Vakuumerzeuger, insbesondere einer Vakuumpumpe, verbunden ist.

5. Vorrichtung nach Anspruch 4, wobei der zentrale Vakuumspeicher weiterhin mindestens einen Recyclingspeicher (580) aufweist, der mit dem Hauptspeicher (570) und / oder einem Recyclingspeicher über eine oder mehrere abschließbare Verbindungsleitungen verbunden ist, und wobei die Vakuumbereiche (440) sowohl mit dem Hauptspeicher (570) als auch mit jedem der Recyclingspeicher (580) verbunden sind.

6. Vorrichtung nach Anspruch 5, wobei der zentrale Vakuumspeicher eine Vielzahl von in Reihe miteinander verbundenen Recyclingspeichern (580) zum Speichern einer Vielzahl von kaskadenartig abnehmenden Unterdrücken umfasst.

7. Vorrichtung nach einem der vorhergehenden Ansprüche, wobei der zentrale Vakuumspeicher (470; 570, 580) eine Ringleitung umfasst, die mit der Vielzahl der Vakuumbereiche (106, 340, 440) verbunden ist.

8. Vorrichtung nach einem der vorhergehenden Ansprüche, wobei das Volumenverhältnis des zentralen Vakuumspeichers (470; 570, 580) zu den Vakuumbereichen (106, 340, 440) mindestens 2 : 1, bevorzugt mindestens 3 : 1, noch bevorzugter mindestens 5 : 1 ist.

9. Vorrichtung nach einem der vorhergehenden Ansprüche, wobei die Behandlungsstationen je eine Füllvorrichtung zum Befüllen eines Behälters mit einem Füllprodukt innerhalb einer Vakuumkammer (340) aufweisen, und wobei der Vakuumbereich die Vakuumkammer (340) umfasst.

10. Vorrichtung nach einem der Ansprüche 1 bis 8, wobei die Behandlungsstationen (105) je eine Blasvorrichtung oder Formfüllvorrichtung zum Ausformen bzw. Ausformen und Befüllen von Kunststoffbehältern innerhalb einer Vakuumkammer aufweisen, und wobei der Vakuumbereich die Vakuumkammer umfasst.

11. Vorrichtung nach Anspruch 9 oder 10, wobei der Vakuumbereich weiterhin ein Totraumvolumen der Verbindungsleitungen umfasst.

12. Verfahren zum teilweisen Recyceln eines Vakuums in einer Behälterbehandlungsanlage mit einer Vielzahl von Behandlungsstationen (105), die jeweils einen abschließbaren Vakuumbereich (106, 340, 440) aufweisen, mit den folgenden Schritten:
Evakuieren eines ersten Vakuumbereichs (440-1) auf einen ersten Druck;
Durchführen eines Behandlungsschritts an einem Behälter innerhalb des ersten Vakuumbereichs (440-1); und
Entlasten des ersten Vakuumbereichs (440-1) zur Entnahme des behandelten Behälters;
**dadurch gekennzeichnet, dass**
vor dem Entlasten des ersten Vakuumbereichs eine Verbindung zum Druckausgleich zwischen dem ersten Vakuumbereich (440-1) und einem zweiten Vakuumbereich (440-2) mit einem zweiten, höheren Druck und / oder einem zentralen Vakuumspeicher (470; 570, 580) hergestellt wird.

13. Verfahren nach Anspruch 12, weiterhin das Herstellen einer Verbindung zum Druckausgleich zwischen dem zweiten Vakuumbereich (440-2) und dem zentralen Vakuumspeicher (470; 570, 580) umfassend.

14. Verfahren nach Anspruch 13, wobei das Herstellen der Verbindung zwischen dem zweiten Vakuumbereich (440-2) und dem zentralen Vakuumspeicher das aufeinanderfolgende Herstellen einer Verbindung zwischen dem zweiten Vakuumbereich (440-2) und mindestens einem Recyclingspeicher (580) des zentralen Vakuumspeichers mit einem dritten Druck, der niedriger als der zweite Druck ist, und einer Verbindung zwischen dem zweiten Vakuumbereich (440-2) und einem Hauptspeicher (570) des zentralen Vakuumspeichers mit einem vierten Druck, der niedriger als der dritte Druck ist, umfasst.

15. Verfahren nach Anspruch 14, weiterhin das Evakuieren des Hauptspeichers (570) des zentralen Vakuumspeichers auf den vierten Druck umfassend.

## Claims

1. Device for vacuum recycling in a container treatment unit, comprising a plurality of treatment stations (105) that each have a sealable vacuum area (106, 340, 440),
**characterized by**
a plurality of connection lines (118; 350, 360a, 360b; 450, 460; 560a, 560b) that connect the vacuum areas (106, 340, 440) to each other and / or to a central vacuum accumulator (470; 570, 580), and
a control and/or regulating unit that is configured such that a vacuum created in a vacuum area (440-1) is partially transferred to another vacuum area (440-2) and / or the central vacuum accumulator (470; 570, 580).

2. Device according to claim 1, further comprising a plurality of switchable valves that are arranged at the interfaces between the vacuum areas (106, 340, 440) and the connection lines (118; 350, 360a, 360b; 450, 460; 560a, 560b), wherein the control and / or regulating unit is designed for controlled opening and closing of the switchable valves.

3. Device according to claim 1 or 2 wherein the vacuum areas (440-1, 440-2) are connected to each other in pairs.

4. Device according to one of the claims 1 to 3 wherein the central vacuum accumulator comprises a main accumulator (470; 570) that is connected to a vacuum generator, in particular to a vacuum pump.

5. Device according to claim 4 wherein the central vacuum accumulator further comprises at least one recycling accumulator (580), that is connected to the main accumulator (570) and / or a recycling accumulator via one or several sealable connection lines, and wherein the vacuum areas (440) are connected to the main accumulator (570) as well as to each of the recycling accumulators (580).

6. Device according to claim 5 wherein the central vacuum accumulator comprises a plurality of recycling accumulators (580), which are connected to each other in series, to store a plurality of negative pressures that decrease in a cascade-like way.

7. Device according to one of the preceding claims wherein the central vacuum accumulator (470; 570, 580) comprises a circular line that is connected to the plurality of vacuum areas (106, 340, 440).

8. Device according to one of the preceding claims wherein the volume ratio of the central vacuum accumulator (470; 570, 580) to the vacuum areas (106, 340, 440) is at least 2 : 1, preferably at least 3 : 1, even more preferably at least 5 : 1.

9. Device according to one of the preceding claims wherein the treatment stations each have a filling device to fill a container with a filling product within a vacuum chamber (340) and wherein the vacuum area comprises the vacuum chamber (340).

10. Device according to one of the claims 1 to 8 wherein the treatment stations (105) each have a blowing device or a form-filling device for molding and/or molding and filling of plastic containers within a vacuum chamber and wherein the vacuum area comprises the vacuum chamber.

11. Device according to claim 9 or 10 wherein the vacuum area further comprises a dead storage volume of the connection lines.

12. Process for partial recycling of a vacuum in a container treatment unit with a plurality of treatment stations (105), that each have a sealable vacuum area (106, 340, 440), with the following steps:
evacuating a first vacuum area (440-1) to a first pressure;
performing a treatment step on a container within the first vacuum area (440-1); and
ventilating the first vacuum area (440-1) for removal of the treated container;
**characterized in that**
prior to ventilating the first vacuum area, a connection for pressure equalization between the first vacuum area (440-1) and a second vacuum area (440-2) at a second, higher pressure and / or a central vacuum accumulator (470; 570, 580) is created.

13. Process according to claim 12, further comprising the creation of a connection for pressure equalization between the second vacuum area (440-2) and the central vacuum accumulator (470; 570, 580).

14. Process according to claim 13 wherein the creation of the connection between the second vacuum area (440-2) and the central vacuum accumulator comprises the consecutive creation of a connection between the second vacuum area (440-2) and at least one recycling accumulator (580) of the central vacuum accumulator at a third pressure that is lower than the second pressure, and a connection between the second vacuum area (440-2) and a main accumulator (570) of the central vacuum accumulator at a fourth pressure that is lower than the third pressure.

15. Process according to claim 14, further comprising the evacuation of the main accumulator (570) of the central vacuum accumulator to the fourth pressure.

## Revendications

1. Dispositif de recyclage de vide dans une installation de traitement de contenants, 1 comprenant une pluralité de postes de traitement (105), qui présentent chacun une zone de vide (106, 340, 440) pouvant être fermée,
**caractérisé par**
une pluralité de conduites de liaison (118; 350, 360a, 360b; 450, 460; 560a, 560b), qui relient les zones de vide (106, 340, 440) entre elles et/ou à un accumulateur de vide central (470; 570, 580), et
une unité de commande et/ou de régulation, qui est conçue de manière à permettre de basculer en partie un vide produit dans une zone de vide (440-1) vers une autre zone de vide (440-2) et/ou vers l'accumulateur de vide central (470; 570, 580).

2. Dispositif selon la revendication 1, comprenant en outre une pluralité de vannes commutables, qui sont agencées au niveau des interfaces entre les zones de vide (106, 340, 440) et les conduites de liaison (118; 350, 360a, 360b; 450, 460; 560a, 560b), l'unité de commande et/ou de régulation étant configurée pour assurer l'ouverture et la fermeture contrôlée des vannes commutables.

3. Dispositif selon la revendication 1 ou la revendication 2, dans lequel les zones de vide (440-1, 440-2) sont reliées par paires.

4. Dispositif selon l'une des revendications 1 à 3, dans lequel l'accumulateur de vide central comprend un accumulateur principal (470; 570), qui est relié à un générateur de vide, notamment une pompe à vide.

5. Dispositif selon la revendication 4, dans lequel l'accumulateur de vide central comprend par ailleurs au moins un accumulateur de recyclage (580), qui est relié à l'accumulateur principal (570) et/ou à un accumulateur de recyclage par l'intermédiaire d'une ou de plusieurs conduites de liaison pouvant être fermées, et dans lequel les zones de vide (440) sont reliées aussi bien à l'accumulateur principal (570) qu'à chacun des accumulateurs de recyclage (580).

6. Dispositif selon la revendication 5, dans lequel l'accumulateur de vide central comporte une pluralité d'accumulateurs de recyclage (580) reliés mutuellement en série, pour le stockage d'une pluralité de dépressions diminuant en cascade.

7. Dispositif selon l'une des revendications précédentes, dans lequel l'accumulateur de vide central (470; 570, 580) comprend une conduite en anneau, qui est reliée à ladite pluralité de zones de vide (106, 340, 440).

8. Dispositif selon l'une des revendications précédentes, dans lequel le rapport de volume de l'accumulateur de vide central (470; 570, 580) aux zones de vide (106, 340, 440) est au moins de 2 : 1, de préférence d'au moins 3 : 1, et de manière encore plus préférable d'au moins 5 : 1.

9. Dispositif selon l'une des revendications précédentes, dans lequel les postes de traitement comprennent chacun un dispositif de remplissage pour remplir un contenant avec un produit de remplissage à l'intérieur d'une chambre à vide (340), et dans lequel la zone de vide englobe la chambre à vide (340).

10. Dispositif selon l'une des revendications 1 à 8, dans lequel les postes de traitement (105) comprennent chacun un dispositif de soufflage ou dispositif de remplissage de formage pour assurer le formage ou respectivement le formage et remplissage de contenants en matière plastique à l'intérieur d'une chambre à vide, et dans lequel la zone de vide englobe la chambre à vide.

11. Dispositif selon la revendication 9 ou la revendication 10, dans lequel la zone de vide englobe en outre un volume d'espace mort des conduites de liaison.

12. Procédé pour le recyclage partiel d'un vide dans une installation de traitement de contenants avec une pluralité de postes de traitement (105), qui présentent chacun une zone de vide (106, 340, 440) pouvant être fermée, comprenant les étapes suivantes :
réalisation d'un vide dans une première zone de vide (440-1) à une première pression ;
exécution d'une étape de traitement sur un contenant à l'intérieur de la première zone de vide (440-1) ; et
délestage de la première zone de vide (440-1) pour prélever le contenant traité ;
**caractérisé en ce que**
avant le délestage de la première zone de vide, on établit une liaison de compensation de pression entre la première zone de vide (440-1) et une deuxième zone de vide (440-2) avec une deuxième pression, plus élevée, et/ou un accumulateur de vide central (470; 570, 580).

13. Procédé selon la revendication 12, comprenant, en outre, l'établissement d'une liaison de compensation de pression entre la deuxième zone de vide (440-2) et l'accumulateur de vide central (470; 570, 580).

14. Procédé selon la revendication 13, d'après lequel l'établissement de la liaison entre la deuxième zone de vide (440-2) et l'accumulateur de vide central comprend l'établissement successif d'une liaison entre la deuxième zone de vide (440-2) et au moins un accumulateur de recyclage (580) de l'accumulateur de vide central avec une troisième pression, qui est plus basse que la deuxième pression, et d'une liaison entre la deuxième zone de vide (440-2) et un accumulateur principal (570) de l'accumulateur de vide central avec une quatrième pression, qui est plus basse que la troisième pression.

15. Procédé selon la revendication 14, comprenant, en outre, la mise sous vide de l'accumulateur principal (570) de l'accumulateur de vide central, à un niveau de pression correspondant à la quatrième pression.
